# EUROPÄISCHE PATENTSCHRIFT

(11) **EP 2 394 863 B1**
(45) Veröffentlichungstag und Bekanntmachung des Hinweises auf die Patenterteilung: **26.03.2014**
(21) Anmeldenummer: 11161820.3
(22) Anmeldetag: 11.04.2011
(51) Int. Cl.: B60R 21/01

(54) **Steuergerät zur Ansteuerung von Personenschutzmitteln für ein Fahrzeug bzw. Verfahren zum Betreiben eines solchen Steuergeräts**
Control device for controlling personal protection means for a vehicle and method for operating such a control device
Dispositif de commande pour la commande de moyens de protection de personnes pour un véhicule and procédé de commande d'un tel appareil de commande

(30) Priorität: 08.06.2010 DE 102010029783
(43) Veröffentlichungstag der Anmeldung: 14.12.2011
(73) Patentinhaber: Robert Bosch GmbH, 70442 Stuttgart (DE)
(72) Erfinder: Oberneder, Simon, 71229, Leonberg (DE); Zuschlag, Rainer, 71636, Ludwigsburg (DE); Weinmann, Ralph, 70839, Gerlingen (DE); Haug, Michael, 70499, Stuttgart (DE)

(56) Entgegenhaltungen:
- EP-A1- 1 671 860
- DE-A1-102006 006 431
- KR-B1- 100 845 894
- US-A1- 2003 033 065

## Beschreibung

### Stand der Technik

Die Erfindung betrifft ein Steuergerät zur Ansteuerung von Personenschutzmitteln für ein Fahrzeug bzw. ein entsprechendes Verfahren zum Betreiben eines solchen Steuergeräts nach der Gattung der unabhängigen Patentansprüche.

Aus DE 10 2006 006 431 A1 ist ein Steuergerät für ein Fahrzeug mit einem Energieversorgungsbaustein zur Bereitstellung von vorgegebenen Spannungen für das Steuergerät, einem Schlafmechanismus, der zumindest den Energieversorgungsbaustein in einen Schlafmodus in Abhängigkeit von einem ersten externen Signal überführt, so dass der Energieversorgungsbaustein keine der vorgegebenen Spannungen mehr ausgibt, und einem Weckmechanismus bekannt, der zumindest den Energieversorgungsbaustein in einen Normalmodus in Abhängigkeit von einem zweiten externen Signal überführt, so dass der Energieversorgungsbaustein die vorgegebenen Spannungen ausgibt. Zudem wird offenbart, beispielsweise über einen CAN-Bus ein externes Aktivierungssignal an das Steuergerät zu senden, um das Steuergerät aufzuwecken, was mit Normalmodus bezeichnet wird. Alternativ kann das Aufwecken auch über eine externe Aktivierungsleitung erfolgen. Der Übergang in den Schlafmodus kann über einen CAN-Busbefehl erfolgen.

Aus der EP 1 671 860 ist ein Steuergerät zu Ansteuerung von Personenschutzmitteln für ein Fahrzeug mit einem Schlafmechanismus, der das Steuergerät in Abhängigkeit von einem ersten externen Signal in einen Schlafmodus überführt und zumindest eine Energiezufuhr unterbricht, so dass die Energieversorgung von mindestens einer Detektionsschaltung unterbrochen ist, und einem Weckmechanismus bekannt, der das Steuergerät in Abhängigkeit von einem zweiten externen Signal in einen Normalmodus überführt und die zumindest eine Energiezufuhr wieder herstellt, so dass die mindestens eine Detektionsschaltung wieder mit Energie versorgt wird.

### Offenbarung der Erfindung

Das erfindungsgemäße Steuergerät zur Ansteuerung von Personenschutzmitteln für ein Fahrzeug bzw. das erfindungsgemäße Verfahren zum Betreiben eines solchen Steuergeräts mit den Merkmalen der unabhängigen Patentansprüche haben demgegenüber den Vorteil, dass ein CAN-Bussignal oder ein anderes steuergeräte-externes Datensignal nicht mehr zum Aufwecken des Steuergeräts führen kann, sondern nur der einzige elektrische Impuls. Dieser Impuls wird im folgenden auch als Wake-Signal oder -Impuls bezeichnet. Damit wird der Datenverkehr auf beispielsweise einem solchen CAN-Bus, an den eine Vielzahl von Teilnehmern angeschlossen sind, als Störfaktor ausgeschlossen, und es können nicht mehr Zustände auftreten, bei denen es zwischen Aufwecken und in den Schlafmodus übergehen in kurzer Zeit hin- und herspringt, weil beispielsweise Busstationen am CAN-Bus beginnen, Daten über den CAN-Bus zu übertragen.

Vorteilhaft ist auch, dass das Wecksignal durch den einen elektrischen Impuls erfolgt und somit ein besonders einfaches Wecksignal darstellt. Dieser einzige elektrische Impuls kann verschiedene Ausprägungen erfahren. Wie unten dargestellt, ist erfindungsgemäß die einzige Bedingung, dass dieser einzige elektrische Impuls eine bestimmte Mindestbreite im Zeitbereich aufweist. Es können auch noch Zusatzbedingungen wie eine Mindestamplitude eingeführt werden. Damit kann dieser elektrische Impuls von Störimpulsen, die meist kurzzeitig nur auftauchen, effektiv unterschieden werden.

Die Energiesparmaßnahmen in einem Fahrzeug, die vorliegend durch die Erfindung verbessert werden sollen, sind bei einem Fahrzeug mit einer Vielzahl von Steuergeräten und damit Verbrauchern besonders wichtig, um die Batterie nicht unnötig zu belasten. Durch die Erfindung erfolgt die Abschaltung beispielsweise vom Airbagsteuergerät robust, und es wird eine Phase mit häufigem Einschalten und Ausschalten des Airbagsteuergeräts vermieden.

Ein Steuergerät ist vorliegend ein elektrisches Gerät, das Steuersignale für die Ansteuerung von Personenschutzmitteln erzeugt, wobei dafür Sensorsignale, wie beispielsweise Beschleunigungs- und/oder Luftdrucksignale, verwendet werden. Bei dem Steuergerät handelt es sich üblicherweise um eine bauliche Einheit, die durch eine Gehäuse oder einen anderen Schutz umschlossen ist und über Schnittstellen Daten austauschen bzw. den oder die Zündströme abgeben kann.

Das Ansteuern der Personenschutzmittel mithin Airbags, Gurtstraffer, crashaktive Kopfstützen oder crashaktive Sitzelemente bedeutet die Aktivierung oder Auslösung dieser Personenschutzmittel.

Mit dem Energieversorgungsbaustein ist beispielsweise ein integrierter Schaltkreis oder eine Mehrzahl von integrierten Schaltkreisen oder auch nur ein Teil eines integrierten Schaltkreises gemeint, der von der Batteriespannung oder einer durch die Batteriespannung aufgeladenen Energiereserve, wie einem Kondensator, die notwendigen Spannungen für das Steuergerät vorgibt, also beispielsweise 3,3 und 5 V, die für gewisse Logikbausteine oder andere ICs im Steuergerät notwendig sind. D.h. dieser Energieversorgungsbaustein ist eine zentrale Komponente des Steuergeräts, denn ein Abschalten dieses Energieversorgungsbausteins führt zum Verlust der Funktion des Steuergeräts, so dass das Steuergerät seine Aufgaben nicht mehr erfüllt. Damit ist es vorteilhaft und einfach, gerade nur diesen Energieversorgungsbaustein für den Schlaf- und Weckmodus des Steuergeräts anzusteuern.

Mit dem Schlafmechanismus wird vorliegend die Funktion bezeichnet, die es dem Steuergerät ermöglicht, auf ein externes Signal hin in den Schlafmodus überzugehen, der ein Minimum oder im besten Falle gar keine Energie benötigt, bis auf die Komponenten die das Wecken zumindest einleiten. Als externes Signal kommt, wie beispielsweise im Stand der Technik beschrieben, ein Datenbussignal in Frage. Aber auch andere externe Signale können vorliegend verwendet werden, wobei mit externen Signalen solche Signale gemeint sind, die außerhalb des Steuergerät erzeugt und dann dem Steuergerät zugeführt werden. Der Schlafmodus führt dann dazu, dass der Versorgungsbaustein keine vorgegebenen Spannungen mehr ausgibt, so dass das ganze Steuergerät mit seinen elektrischen und elektronischen Komponenten bis auf den Weckbaustein und gegebenenfalls noch weitere Komponenten keinen Strom mehr verbrauchen.

Der entsprechende Weckmechanismus, der erfindungsgemäß ausgebildet ist, führt den Energieversorgungsbaustein in einen Normalmodus in Abhängigkeit von einem zweiten externen Signal, das erfindungsgemäß ein einziger elektrischer Impuls ist. Der Normalmodus führt dazu, dass der Energieversorgungsbaustein die vorgegebenen Spannungen ausgibt, und somit die einzelnen Komponenten des Steuergeräts bestromt sind und damit Energie umsetzen.

Die Weckeinheit hat die Funktion, das zweite externe Signal als Wecksignal zu interpretieren und den Energieversorgungsbaustein zu aktivieren, so dass dieser Energieversorgungsbaustein wieder die vorgegebenen Spannungen für das Steuergerät ausgibt. Diese Weckeinheit kann diskret beispielsweise aus einzelnen logischen Blöcken und anderen Bauteilen aufgebaut sein, oder aber auch verschiedene Stufen der Integration erfahren, bis zur Vollintegration. Wie aus einem abhängigen Anspruch hervorgeht, kann die Weckeinheit Teil eines sogenannten System-ASICs, also eines großen integrierten Schaltkreises mit verschiedenen Funktionen, sein. Der einzige elektrische Impuls kann ein Spannungs- oder Stromimpuls sein, der mindestens eine vorgegebene Amplitude und eine vorgegebene zeitliche Breite aufweist. Somit wäre auch ein Dauereinschaltsignal, beispielsweise auch die Batteriespannung, ein solcher einziger elektrischer Impuls.

Aus den abhängigen Ansprüchen gehen vorteilhafte Weiterbildungen des im unabhängigen Patentanspruch angegebenen Steuergeräts bzw. Verfahrens hervor.

Vorteilhaft ist, dass die Weckeinheit einen Zeitfilter für ein von dem einzigen elektrischen Impuls abgeleiteten Arbeitssignal, eine Speicherschaltung zum Halten eines Zustands, der durch den einzigen elektrischen Impuls bewirkt wird, eine Energieversorgung für die Speicherschaltung, die aus einer Fahrzeugbatteriespannung, mit der die Weckeinheit unmittelbar verbunden ist, die Energie für die Speicherschaltung ableitet, und eine Signalerzeugungsschaltung zur Erzeugung eines Weckimpulses für den Versorgungsbaustein aufweist. Damit sind die wichtigsten Komponenten der Weckeinheit angegeben, wobei der Zeitfilter die Prüfung für die zeitliche Mindestbreite des Arbeitssignals durchführt, die Speicherschaltung hält den Zustand, der durch den einzigen elektrischen Impuls bewirkt wird. Die Energieversorgung für die Speicherschaltung ist notwendig, um eben diese Speicherschaltung mit Energie aus der Fahrzeugbatteriespannung zu versorgen, und die Signalerzeugungsschaltung dient zur Erzeugung des Wecksignals für den Versorgungsbaustein, das ebenfalls ein Dauersignal sein kann. Die unmittelbare Verbindung der Weckeinheit mit der Fahrzeugbatteriespannung heißt, dass die Weckeinheit auch direkt über eine Leitung mit der Fahrzeugbatteriespannung verbunden ist, so dass die Weckeinheit daraus Energie ableiten kann, um die Speicherschaltung zu versorgen, denn aus dem Energieversorgungsbaustein kann im Schlafmodus keine Energie abgezweigt werden.

Vorteilhafter Weise lässt der Zeitfilter nur einen elektrischen Impuls als dem Arbeitssignal mit mindestens 10 ms Breite passieren. Damit können Störsignale, die kürzer sind, effektiv herausgefiltert werden und führen nicht zu einem Aufwecken des Steuergeräts.

Die Speicherschaltung kann vorzugsweise als getaktetes D-Flip-Flop ausgebildet sein, da dieses Flip-Flop besonders stabil ist hinsichtlich seiner Zustände. Ein RS-Flip-Flop beispielsweise kennt instabile Zustände, die vorliegend nicht zu bevorzugen sind. Die Speicherschaltung kann jedoch alternativ auch softwaremäßig oder mit anderen Speicherschaltungen realisiert sein. Dieses getaktete D-Flip-Flop hat weiterhin einen sogenannten Preset-Eingang zum Setzen und einen sogenannten Clear-Eingang zum Löschen, um einen definierten Ausgangszustand einzustellen.

Weiterhin ist es vorteilhaft, dass die Signalerzeugungsschaltung einen Schalter aufweist. Der Schalter dient dazu, das Wecksignal für den Energieversorgungsbaustein geeignet auszulegen. Der Schalter is vorzugsweise als ein Transistorschalter ausgeführt.

Eine weitere vorteilhafte Ausprägung der Erfindung ist darin zu sehen, dass die Energieversorgung der Weckeinheit einen Kurzschlussstromschutz, eine Spannungsregelung und eine Spannungsstabilisierung aufweist. Diese Blöcke sichern zum einen die Weckeinheit, wie der Kurzschlussstromschutz und führen andererseits zu einer Spannungsregelung für die Ausgabe der notwendigen Spannungen, insbesondere für die Speicherschaltung. Die Spannungsstabilisierung dient dazu, instabile Zustände in der Spannungsregelung zu unterdrücken.

Eine weitere vorteilhafte Weiterbildung der Erfindung ist dadurch gegeben, dass die Weckeinheit einen Filter für ein Resetsignal aufweist, wobei das Filter in Abhängigkeit von dem Resetsignal die Speicherschaltung zurücksetzt. Dieses Resetsignal wird üblicherweise von einem Prozessor im Steuergerät für den Schlafmechanismus erzeugt und sorgt dafür, dass die Speicherschaltung so wieder zurückgesetzt wird, dass der Energieversorgungsbaustein letztlich in seiner Funktion unterbrochen wird. Das Filter kann als sogenanntes Glitchfilter ausgebildet sein, wobei die Grundform ein RC-Glied ist. Dieses Glitchfilter hat insbesondere die Funktion, ein ungewolltes Zurücksetzen der Speicherschaltung beispielsweise während einer Portinitialisierung zu verhindern. Das Resetsignal wird vom Prozessor dann erzeugt, wenn zum einen das Wecksignal nicht da ist und zum anderen eine CAN-Botschaft erhalten wurde, dass sich das Steuergerät abschalten soll. Das Wecksignal wird dabei mittels eines Analog-DigitalWandlers gemessen.

Wie oben bereits angedeutet, ist es eine vorteilhafte Weiterbildung der Erfindung, dass die Weckeinheit und der Energieversorgungsbaustein auf einem System-ASIC im Steuergerät integriert sind und dass das Resetsignal aus einer Verknüpfung eines Softwarebefehls und einem nicht vorhandenen elektrischen Impuls erzeugt wird. Dies bedeutet, der Softwarebefehl stammt vom Mikrocontroller oder einem anderen Prozessor im Steuergerät und zeigt an, dass das Steuergerät in den Schlafmodus übergehen soll. Der Softwarebefehl kann eine entsprechende CAN-Botschaft sein, die von einem externen Steuergerät gesteuert wird. Um diese Entscheidung abzusichern, erfolgt die Verknüpfung mit dem Signal, das auf der Weckleitung liegt. Damit gelingt der Schlafmechanismus nur, wenn der elektrische Impuls nicht auf dieser Weckleitung vorhanden ist.

Ausführungsbeispiele der Erfindung sind in der Zeichnung dargestellt und werden in der nachfolgenden Beschreibung näher erläutert.

Es zeigen
Figur 1 ein erstes Blockschaltbild des erfindungsgemäßen Steuergeräts,
Figur 2 ein Blockschaltbild der erfindungsgemäßen Weckeinheit,
Figur 3 ein Blockschaltbild der Energieversorgung der Weckeinheit,
Figur 4 ein Schaltungsbeispiel für diese Energieversorgungseinheit,
Figur 5 ein RC-Glied,
Figur 6 ein Schaltungsbeispiel für die Speicherschaltung,
Figur 7 ein Schaltungsbeispiel für die Signalerzeugungsschaltung,
Figur 8 ein Blockschaltbild einer integrierten Ausführungsvariante,
Figur 9 ein Flussdiagramm und

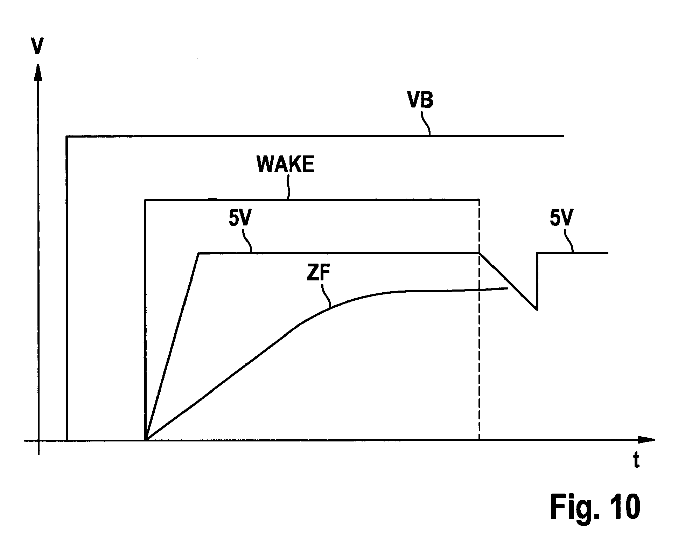

Fig. 10 ein Spannungszeitdiagramm.

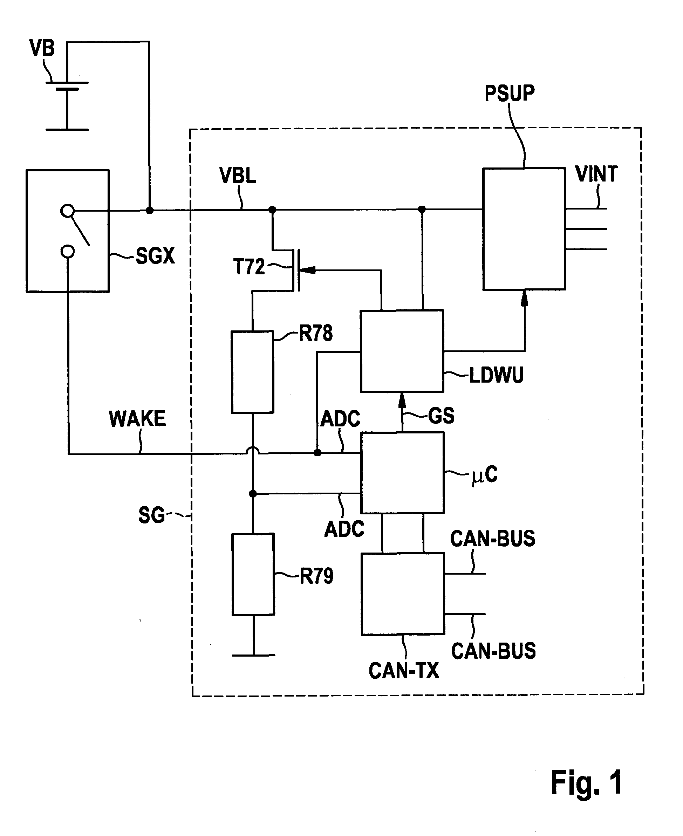

Figur 1 zeigt das erfindungsgemäße Steuergerät SG mit erfindungswesentlichen Komponenten und entsprechend extern angeschlossenen Komponenten. Eine Fahrzeugbatterieleitung VBL führt von außerhalb des Steuergeräts SG ausgehend von einer Fahrzeugbatterie VB in einen Energieversorgungsbaustein PSUP und eine Weckeinheit LDWU, wobei sowohl der Energieversorgungsbaustein PSUP und die Weckeinheit LDWU ihre Energie aus der Fahrzeugbatteriespannung VB ableiten.

Der Energieversorgungsbaustein PSUP wandelt die Batteriespannung VB auf eine höhere Spannung für einen nicht dargestellten Energiespeicher, üblicherweise wenigstens ein Elektrolytkondensator, der dann zur Energieversorgung verwendet wird und aus dessen gespeicherter Energie der Energieversorgungsbaustein PSUP die für das Steuergerät notwendigen Spannungen VINT ableitet. Dazu weist der Energieversorgungsbaustein PSUP beispielsweise Schaltwandler auf.

Wie die Weckeinheit LDWU ihre Energie aus der Batteriespannung VB ableitet, wird weiter unten kurz dargestellt. Die Batteriespannung VB geht jedoch auch in ein weiteres Steuergerät SGX, das einen Schalter S1 aufweist, der die Batteriespannung VB mit der Weckleitung WAKE verbinden kann. Außerdem führt das kurze Schließen des Schalters S1 zur Erzeugung eines elektrischen Spannungsimpulses, der dann an die Weckeinheit LDWU geht. Es ist möglich, auch den Schalter S1 alternativ dauerhaft zu schließen.

Die Batteriespannung VB ist weiterhin mit einem Transistor T72, und zwar mit dessen Drain-Source-Strecke verbunden, um den Strom im Schlafmodus zu unterbrechen. Dafür kann der Transistor T72 durch die Weckeinheit LDWU angesteuert werden. Der fließende Strom der zwischen den Widerständen R78 und R79, die auf den Transistor T72 zur Masse folgen, abfällt, kann vom Mikrocontroller µC über einen Analog/Digital-Wandlereingang ADC aufgenommen und gemessen werden. Ebenfalls über einen weiteren Analog/Digital-Wandler-Eingang wird das Signal auf der Leitung Wake, also der Weckimpuls gemessen.

Die Weckeinheit LDWU weckt über ein Signal den Energieversorgungsbaustein PSUP auf, so dass dieser die notwendigen Spannungen bereitstellt. Der Mikrocontroller µC, der auch von dem Energieversorgungsbaustein PSUP die notwendigen Spannungen erhält, ist mit der Weckeinheit LDWU über eine Datenverbindung verbunden, um einen Schlafbefehl, nämlich Go-to-Sleep GS zu übermitteln.

Der Mikrocontroller µC ist weiterhin mit einem CAN-Transceiver CAN-TX verbunden, um die neuesten Daten über den Fahrzeugzustand zu erhalten. Über den CAN-Tansceiver CAN-TX empfängt der Mikrocontroller µC auch einen Schlafbefehl. Die Verbindungsleitung zwischen dem Mikrocontroller µC, dem CAN-Transceiver CAN-TX ist mit dem Bezugszeichen 10 gekennzeichnet. Der CAN-Tansceiver CAN-TX erhält seine Daten über den CAN-Bus.

Das im Ausführungsbeispiel vorliegende Airbagsteuergerät bzw. das Steuergerät SG zur Ansteuerung von Personenschutzmitteln für ein Fahrzeug ist nur dafür konfiguriert, aufgeweckt zu werden bzw. den Befehl zu bekommen, in den Schlafmodus überzugehen. Dieses Steuergerät SG ist jedoch nicht in der Lage, andere Steuergeräte aufzuwecken oder zu veranlassen, in den Schlafmodus überzugehen.

Weitere Funktionen, die für das Steuergerät SG notwendig sind, wie beispielsweise die Auswertung von Sensorsignalen, die Erzeugung von Ansteuersignalen, die Ansteuerschaltung und gegebenenfalls auch im Steuergerät SG enthaltene Sensoren, wie Beschleunigungssensoren oder Körperschallsensoren oder Drehratensensoren sind der Einfachheit halber weggelassen worden, und es wird sich nur auf die erfindungswesentlichen Teile konzentriert.

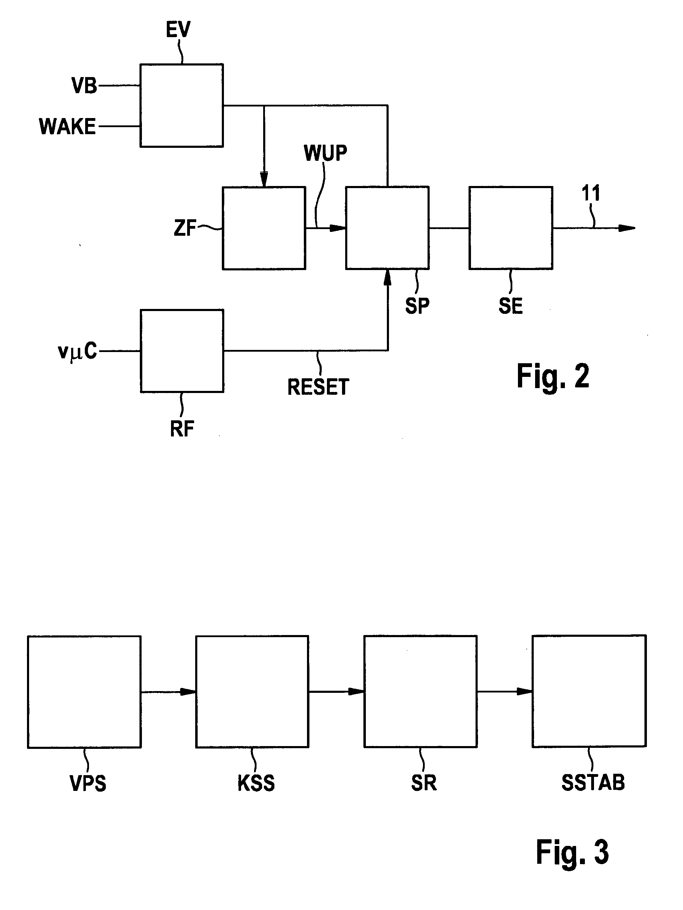

Figur 2 zeigt in einem Blockschaltbild die Komponenten einer beispielhaften Weckeinheit. Die Wakeleitung WAKE ist neben der Batteriespannung VB an die Energieversorgung EV angeschlossen. Ein Weckimpuls auf der Leitung Wake bewirkt, dass die Energieversorgung EV einen Spannungspuls von beispielsweise 5V an ein Zeitfilter ZF überträgt, um kurze elektrische Impulse, die meist Störungen sind, auszufiltern und nur solche elektrischen Impulse passieren zu lassen, die die notwendige zeitliche Breite aufweisen. Dieser Impuls WUP geht dann gegebenenfalls nach einer Vorverarbeitung von dem Zeitfilter ZF in die Speicherschaltung SP. Die Batteriespannung VB ist an die Energieversorgung EV der Weckeinheit LDWU angeschlossen, die daraus die notwendigen Spannungen, insbesondere für die Speicherschaltung SP, formt. Der Weckimpuls könnte auch direkt an das Zeitfilter ZF angeschlossen werden, aber durch die oben beschriebene Maßnahme, den Weckimpuls an die Energieversorgung EV zu geben und dann einen 5V-Impuls an das Zeitfilter ZF zu geben, wird eine Unabhängigkeit von Schwankungen des Weckimpulses erreicht, so dass das Zeitverhalten des Zeitfilters ZF konstant ist und eine geringere Toleranz erreicht wird. Dadurch wird das Arbeitssignal vom Weckimpuls abgeleitet. Das Arbeitssignal WUP ist ein Impuls der stabil ist und nicht solchen Parameterschwankungen wie der Weckimpuls unterliegt.

Ein Resetfilter RF verarbeitet entsprechende Signale und lässt auch nur solche Signale passieren, die die notwendige Breite aufweisen. Diese Signale stammen vom Prozessor µC, was mit vµC gekennzeichnet ist. Ist das Resetsignal RESET breit genug, führt es zum Zurücksetzen der Speicherschaltung SP und damit zum Übergehen in den Schlafmodus.

Der Block SE steht für die Signalerzeugungsschaltung, die das Wecksignal an den Energieversorgungsbaustein übermittelt, und zwar über die Leitung 11.

Figur 3 zeigt in einem Blockschaltbild die einzelnen Komponenten der Energieversorgung der Weckeinheit, nämlich einen Verpolschutz VPS, beispielsweise durch Verpolschutzdioden realisiert, einen Kurzschlussschutz KSS, eine Spannungsregelung SR sowie eine Spannungsstabilisierung SSTAB.

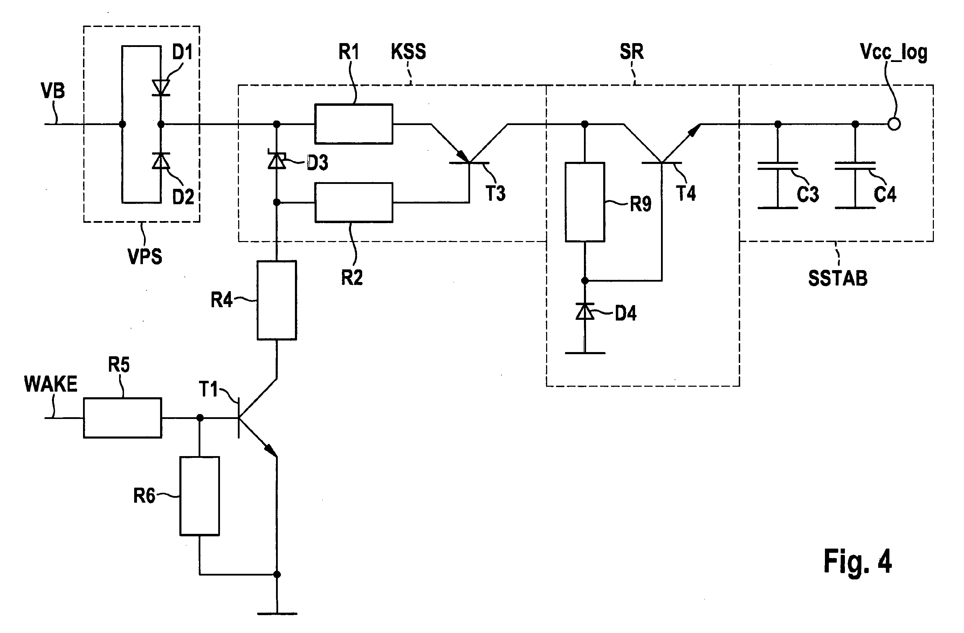

Figur 4 zeigt dies in einem Schaltbild. Der Verpolschutz VPS ist durch die Dioden D1 und D2 realisiert. Der Kurzschlussschutz KSS wird durch die Diode D3, die Widerstände R1, R2, den Transistor T3 realisiert. Die Spannungsregelung hingegen durch die Diode 4, den Widerstand R9 und den Transistor T4.

Die Stabilisierungsschaltung SSTAB wird durch die beiden Kondensatoren, die gegen Masse geschaltet sind, C3 und C4 gebildet.

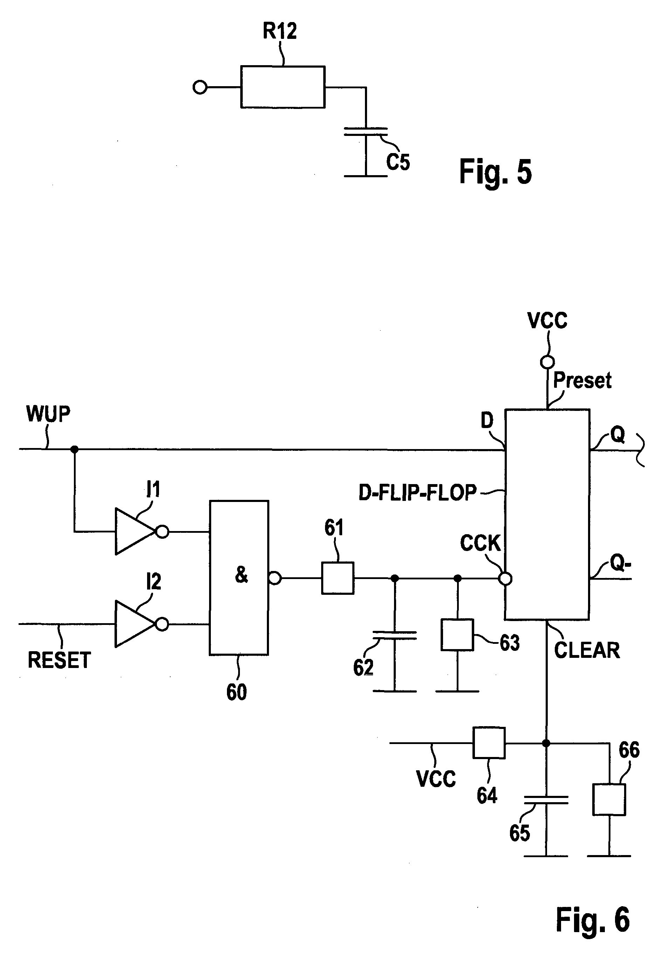

Figur 5 erläutert das RC-Glied, das im Zeitfilter bzw. Glitchfilter angewendet wird, um die entsprechende Breite der elektrischen Impulse zu prüfen. Die Dimensionierung eines solchen RC-Glieds erfolgt in Abhängigkeit von der Impulsbreite, die dieses RC-Glied passieren soll.

Figur 6 zeigt ein Ausführungsbeispiel für die Speicherschaltung nunmehr als getaktetes D-Flip-Flop. Der Weckimpuls WUP vom Zeitfilter ZF geht an den Dateneingang D des D-Flip-Flops, während der Takt aus dem Weckimpuls WUP und dem Resetsignal RESET gebildet wird. Diese Taktbildung erfolgt durch ein Invertieren der Signale WUP und RESET mittels Invertierer I1 und I2. Die so invertierten Signale werden einem NAND-Gatter 60 zugeführt, wobei das Ausgangsignal dieses NAND-Gatters 60 einem weiteren RC-Glied bestehend aus den Widerständen 61 und 63 sowie dem Kondensator 62 zugeführt wird. Dieses RC-Glied verzögert das Ausgangssignal entsprechend der Dimensionierung dieses RC-Gliedes. Liegt das Signal WUP am Dateneingang D des D-Flip-Flops und der Takt am Eingang CLK vor, geht der Ausgang Q auf logisch 1 und der nicht weiter beschaltete Ausgang Q- auf logisch 0. Der Ausgang Q ist an die Leitung 11 angeschlossen.

Dieses D-Flip-Flop wird durch den Eingang Preset und den Eingang Clear auf in einen definierten Ausgangszustand gebracht. Durch Anlegen der Spannung VCC, üblicherweise 5V, die vom Baustein PSUP stammt, an den Eingang Preset und über den RC-Flilter bestehend aus den Widerständen 64 und 66 sowie dem Kondensator 65 wird der Ausgang Q auf logisch 0 gesetzt, solange am Dateneingang D und dem Takteingang CLK nicht gleichzeitig ein Signal anliegt.

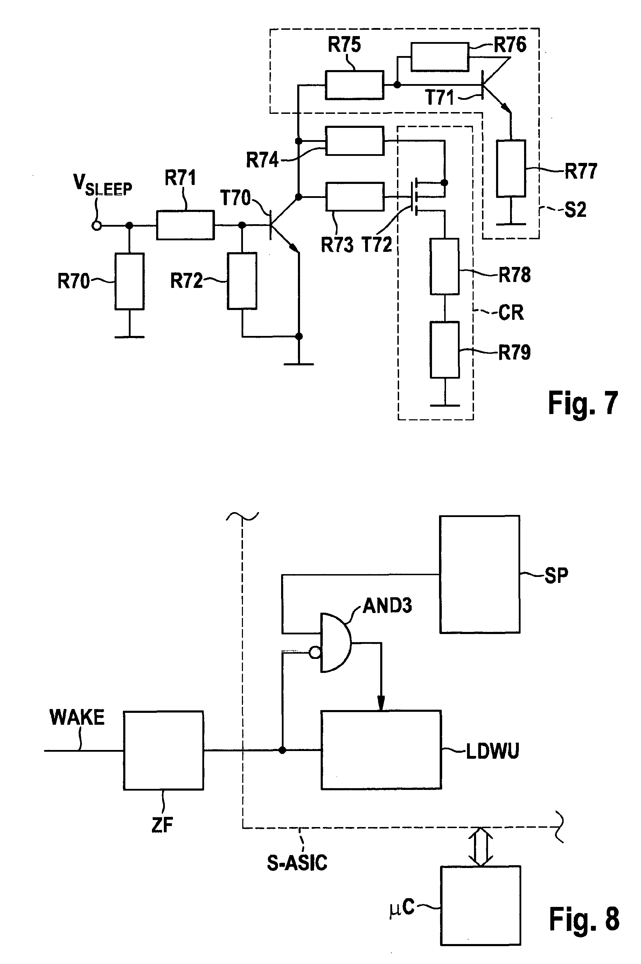

Figur 7 zeigt ein Schaltungsbeispiel für die Signalerzeugungsschaltung. Die Spannung V_{SLEEP} geht auf eine Widerstandsstruktur der Widerstände R70 bis 71 und dann auf einen Transistor T70. Dabei steuert der Transistor T70 über den Basisvorwiderstand R73 den Transistor T72 an, der, wie in Figur 1 gezeigt, dazu dient, Strom von der Leitung abzuleiten.

Der Schalter S2 wird durch die obere Struktur aus dem Transistor T71 und den um ihn herum angeordneten Widerstände R77, R76 und R75 gebildet. Durch den Schalter S2 wird die Spannung VB an den Energieversorgungbaustein PSUP weitergeschaltet. Damit wird dieser Energieversorgungbaustein aufgeweckt.

Figur 8 zeigt noch eine integrierte Lösung, bei dem die Weckeinheit LDWU zurückgesetzt werden soll. Die Weckeinheit LDWU ist auf dem System-ASIC S-Asic angeordnet und auf dem beispielsweise auch der Versorgungsbaustein angeordnet ist. Auch ein SPI-Register SPI ist auf diesem System-ASIC S-Asic vorhanden. Ebenfalls ein AND-Gatter AND3, das ein Signal vom SPI-Register mit dem Signal auf der Wakeleitung verknüpft. Nur wenn die Wakeleitung kein Signal liefert, dann kann der invertierte Eingang des UND-Gatters N3 mit einer logischen 1 vom SPI-Register ein Zurücksetzen der Weckeinheit LDWU bewirken. Der Aufweckbefehl kommt wiederum über die Wakeleitung WAKE mittels eines elektrischen Impulses, wobei ein wie oben beschrieben von diesem Impuls abgeleitetes Arbeitssignal durch das Zeitfilter ZF gefiltert ist. Der Mikrocontroller µC steht mit dem System-ASIC S-ASIC in Wirkverbindung, um beispielsweise über CAN-Bus Daten auszutauschen und insbesondere über das SPI-Register zu füllen. Die Verbindung kann insbesondere über den SPI-Bus erfolgen.

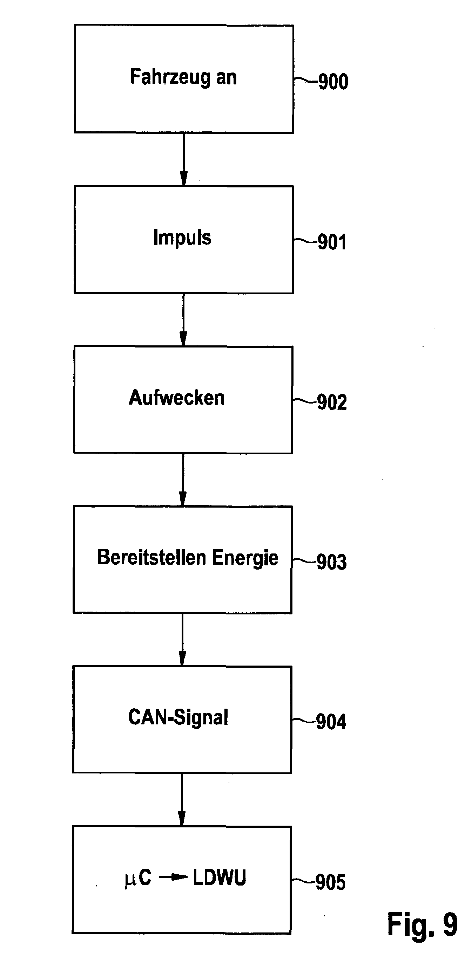

Figur 9 zeigt ein Flussdiagramm des erfindungsgemäßen Verfahrens. Im Verfahrensschritt 900 wird das Fahrzeug beispielsweise durch einen Zündschlüssel oder durch einen Aktivierungsknopf eingeschaltet. Dies führt in Verfahrensschritt 901 zu einem Impuls über die Wakeleitung. Dieser Impuls führt über die Weckeinheit in Verfahrensschritt 902 zum Aufwecken des Steuergeräts SG. Dies führt in Verfahrensschritt 903 dazu, dass der nunmehr auch aufgeweckte Energieversorgungsbaustein PSUP die notwendigen Spannungen für die Bausteine im Steuergerät SG bereitstellt und damit Energie bereitstellt. In Verfahrensschritt 904 kommt später das CAN-Signal, dass das Steuergerät SG sich schlafen legen soll, weil beispielsweise das Fahrzeug geparkt wurde. Dieses CAN-Signal wird vom Mikrocontroller µC in einen Go-to-spleep-Befehl für die Weckeinheit LDWU verwendet, so dass diese dann auch den Energieversorgungsbaustein in den Schlafmodus überführt (Verfahrensschritt 905).

## Patentansprüche

1. Steuergerät (SG) zur Ansteuerung von Personenschutzmitteln für ein Fahrzeug mit:
- einem Energieversorgungsbaustein (PSUP) zur Bereitstellung von vorgegebenen Spannungen (Vint) für das Steuergerät (SG)
- einem Schlafmechanismus, der zumindest den Energieversorgungsbaustein (PSUP) in einen Schlafmodus in Abhängigkeit von einem ersten externen Signal überführt, so dass der Energieversorgungsbaustein (PSUP) keine der vorgegebenen Spannungen (Vint) mehr ausgibt
- einem Weckmechanismus, der zumindest den Energieversorgungsbaustein (PSUP) in einen Normalmodus in Abhängigkeit von einem zweiten externen Signal überführt, so dass der Energieversorgungsbaustein (PSUP) die vorgegebenen Spannungen (Vint) ausgibt, wobei für den Weckmechanismus im Steuergerät (SG) eine Weckeinheit (LDWU) vorgesehen ist, die nur in Abhängigkeit von einem einzigen elektrischen Impuls als dem zweiten externen Signal den Weckmechanismus ausführt, **dadurch gekennzeichnet, dass** dieser einzige elektrische Impuls eine bestimmte Mindestbreite im Zeitbereich aufweist.

2. Steuergerät nach Anspruch 1, **dadurch gekennzeichnet, dass** die Weckeinheit (LDWU) einen Zeitfilter (ZF) für ein von dem einzigen elektrischen Impuls abgeleiteten Arbeitssignal, eine Speicherschaltung (SP) zum Halten eines Zustands, der durch den einzigen elektrischen Impuls bewirkt wird, eine Energieversorgung für die Speicherschaltung (SP), die aus einer Fahrzeugbatteriespannung, mit der die Weckeinheit (LDWU) unmittelbar verbunden ist, die Energie für die Speicherschaltung (SP) ableitet, und eine Signalerzeugungsschaltung (SE) zur Erzeugung eines Weckimpulses für den Energieversorgungsbaustein (PSUP) aufweist.

3. Steuergerät nach Anspruch 2, **dadurch gekennzeichnet, dass** der Zeitfilter (ZF) nur einen elektrischen Impuls mit mindestens 10ms Breite passieren lässt.

4. Steuergerät nach Anspruch 2 oder 3, **dadurch gekennzeichnet, dass** die Speicherschaltung (SP) als getaktetes D-Flip-Flop ausgebildet ist.

5. Steuergerät nach einen der Ansprüche 2 bis 4, **dadurch gekennzeichnet, dass** die Signalerzeugungsschaltung (SE) einen Schalter (S1) aufweist.

6. Steuergerät nach einem der Ansprüche 2 bis 5, **dadurch gekennzeichnet, dass** die Energieversorgung der Weckeinheit (LDWU) einen Kurzschlussstromschutz, eine Spannungsregelung und eine Spannungsstabilisierung aufweist.

7. Steuergerät nach einem der vorhergehenden Ansprüche, **dadurch gekennzeichnet, dass** die Weckeinheit (LDWU) einen Filter für ein Resetsignal aufweist, wobei das Filter in Abhängigkeit von dem Resetsignal die Speicherschaltung (SP) zurücksetzt.

8. Steuergerät nach Anspruch 7, **dadurch gekennzeichnet, dass** das Resetsignal von einem Prozessor (µC) im Steuergerät (SG) für den Schlafmechanismus erzeugt wird.

9. Steuergerät nach Anspruch 1, **dadurch gekennzeichnet, dass** die Weckeinheit (LDWU) und der Energieversorgungsbaustein (PSUP) auf einem System-ASIC (S-ASIC) im Steuergerät (SG) integriert sind und dass das Resetsignal aus einer Verknüpfung eines Softwarebefehls und einem nicht vorhandenen elektrischen Impuls erzeugt wird.

10. Verfahren zum Betreiben eines Steuergeräts zur Ansteuerung von Personenschutzmitten für ein Fahrzeug mit folgenden Verfahrensschritten:
- Bereitstellen von vorgegebenen Spannungen (Vᵢₙₜ) für das Steuergerät (SG) durch einen Energieversorgungsbaustein (PSUP)
- Ausführen eines Schlafmechanismus, so dass zumindest der Energieversorgungsbaustein (PSUP) in einen Schlafmodus in Abhängigkeit von einem ersten externen Signal überführt wird, so dass der Energieversorgungsbaustein (PSUP) keine der vorgegebenen Spannungen (Vᵢₙₜ) mehr ausgibt
- Ausführen eines Weckmechanismus, so dass zumindest der Energieversorgungsbaustein (PSUP) in einen Normalmodus in Abhängigkeit von einem zweiten externen Signal überführt wird, so dass der Energieversorgungsbaustein (PSUP) die vorgegebenen Spannungen (Vᵢₙₜ) ausgibt, wobei für den Weckmechanismus im Steuergerät (SG) eine Weckeinheit (LDWU) nur in Abhängigkeit von einem einzigen elektrischen Impuls als dem zweiten externen Signal den Weckmechanismus, ausführt, **dadurch gekennzeichnet, dass** dieser einzige elektrische Impuls eine bestimmte Mindestbreite im Zeitbereich aufweist.

## Claims

1. Control device (SG) for actuating personal protection means in a vehicle, having:
- a power supply module (PSUP) for providing predefined voltages (Vint) for the control device (SG)
- a sleep mechanism, which transfers at least the power supply module (PSUP) into a sleep mode on the basis of a first external signal, with the result that the power supply module (PSUP) no longer outputs the predefined voltages (Vint)
- a wake mechanism, which transfers at least the power supply module (PSUP) into a normal mode on the basis of a second external signal, with the result that the power supply module (PSUP) outputs the predefined voltages (Vint), wherein a wake unit (LDWU) is provided for the wake mechanism in the control device (SG), said wake unit executing the wake mechanism only on the basis of a single electrical pulse as the second external signal, **characterized in that** said single electrical pulse has a defined minimum width in the time domain.

2. Control device according to Claim 1, **characterized in that** the wake unit (LDWU) has a time filter (ZF) for an operating signal derived from the single electrical pulse, a storage circuit (SP) for storing a state which is effected by means of the single electrical pulse, a power supply for the storage circuit (SP), which power supply derives the power for the storage circuit (SP) from a vehicle battery voltage to which the wake unit (LDWU) is directly connected, and a signal generation circuit (SE) for generating a wake pulse for the power supply module (PSUP).

3. Control device according to Claim 2, **characterized in that** the time filter (ZF) allows only an electrical pulse with a width of at least 10 ms to pass.

4. Control device according to Claim 2 or 3, **characterized in that** the storage circuit (SP) is designed as a clocked D-type flip-flop.

5. Control device according to one of Claims 2 to 4, **characterized in that** the signal generation circuit (SE) has a switch (S1).

6. Control device according to one of Claims 2 to 5, **characterized in that** the power supply of the wake unit (LDWU) has a short-circuit current protection means, a voltage regulation means and a voltage stabilization means.

7. Control device according to one of the preceding claims, **characterized in that** the wake unit (LDWU) has a filter for a reset signal, wherein the filter resets the storage circuit (SP) on the basis of the reset signal.

8. Control device according to Claim 7, **characterized in that** the reset signal is generated by a processor (µC) in the control device (SG) for the sleep mechanism.

9. Control device according to Claim 1, **characterized in that** the wake unit (LDWU) and the power supply module (PSUP) are integrated on a system ASIC (S-ASIC) in the control device (SG) and **in that** the reset signal is generated from a conjunction of a software command and an absence of electrical pulse.

10. Method for operating a control device for actuating personal protection means in a vehicle, having the following method steps:
- providing predefined voltages (Vint) for the control device (SG) by means of a power supply module (PSUP)
- executing a sleep mechanism, with the result that at least the power supply module (PSUP) is transferred into a sleep mode on the basis of a first external signal, with the result that the power supply module (PSUP) no longer outputs the predefined voltages (Vint)
- executing a wake mechanism, with the result that at least the power supply module (PSUP) is transferred into a normal mode on the basis of a second external signal, with the result that the power supply module (PSUP) outputs the predefined voltages (Vint), wherein, for the wake mechanism in the control device (SG), a wake unit (LDWU) executes the wake mechanism only on the basis of a single electrical pulse as the second external signal, **characterized in that** said single electrical pulse has a defined minimum width in the time domain.

## Revendications

1. Contrôleur (SG) pour commander des moyens de protection personnelle pour un véhicule comprenant :
- un composant d'alimentation en énergie (PSUP) destiné à délivrer des tensions prédéfinies (Vint) pour le contrôleur (SG)
- un mécanisme de veille qui amène au moins le composant d'alimentation en énergie (PSUP) dans un mode de veille en fonction d'un premier signal externe, de sorte que le composant d'alimentation en énergie (PSUP) ne délivre plus aucune des tensions prédéfinies (Vint)
- un mécanisme de réveil qui amène au moins le composant d'alimentation en énergie (PSUP) dans un mode normal en fonction d'un deuxième signal externe, de sorte que le composant d'alimentation en énergie (PSUP) délivre les tensions prédéfinies (Vint), une unité de réveil (LDWU) étant prévue dans le contrôleur (SG) pour le mécanisme de réveil, laquelle exécute le mécanisme de réveil uniquement en fonction d'une unique impulsion électrique en tant que deuxième signal externe, **caractérisé en ce que** cette unique impulsion électrique présente une largeur minimale donnée dans le domaine du temps.

2. Contrôleur selon la revendication 1, **caractérisé en ce que** l'unité de réveil (LDWU) présente un filtre de temps (ZF) pour un signal de travail dérivé de l'unique impulsion électrique, un circuit de mémoire (SP) pour maintenir un état qui est provoqué par l'unique impulsion électrique, une alimentation en énergie pour le circuit de mémoire (SP), laquelle dérive l'énergie pour le circuit de mémoire (SP) d'une tension de batterie de véhicule avec laquelle l'unité de réveil (LDWU) est reliée directement, et un circuit générateur de signal (SE) pour générer une impulsion de réveil pour le composant d'alimentation en énergie (PSUP).

3. Contrôleur selon la revendication 2, **caractérisé en ce que** le filtre de temps (ZF) ne laisse passer qu'une impulsion électrique ayant une largeur minimale de 10 ms.

4. Contrôleur selon la revendication 2 ou 3, **caractérisé en ce que** le circuit de mémoire (SP) est réalisé sous la forme d'une bascule bistable D cadencée.

5. Contrôleur selon l'une des revendications 2 à 4, **caractérisé en ce que** le circuit générateur de signal (SE) présente un commutateur (S1).

6. Contrôleur selon l'une des revendications 2 à 5, **caractérisé en ce que** l'alimentation en énergie de l'unité de réveil (LDWU) présente une protection contre les courants de court-circuit, une régulation de la tension et une stabilisation de la tension.

7. Contrôleur selon l'une des revendications précédentes, **caractérisé en ce que** l'unité de réveil (LDWU) présente un filtre pour un signal de réinitialisation, le filtre réinitialisant le circuit de mémoire (SP) en fonction du signal de réinitialisation.

8. Contrôleur selon la revendication 7, **caractérisé en ce que** le signal de réinitialisation est généré par un processeur (µC) dans le contrôleur (SG) pour le mécanisme de veille.

9. Contrôleur selon la revendication 1, **caractérisé en ce que** l'unité de réveil (LDWU) et le composant d'alimentation en énergie (PSUP) sont intégrés sur un ASIC système (S-ASIC) dans le contrôleur (SG) et **en ce que** le signal de réinitialisation est généré à partir d'une combinaison d'une instruction logicielle et d'une impulsion électrique non présente.

10. Procédé pour faire fonctionner un contrôleur pour commander des moyens de protection personnelle pour un véhicule comprenant les étapes de procédé suivantes :
- délivrance de tensions prédéfinies (Vint) pour le contrôleur (SG) par un composant d'alimentation en énergie (PSUP)
- exécution d'un mécanisme de veille, de sorte qu'au moins le composant d'alimentation en énergie (PSUP) soit amené dans un mode de veille en fonction d'un premier signal externe, de sorte que le composant d'alimentation en énergie (PSUP) ne délivre plus aucune des tensions prédéfinies (Vint)
- exécution d'un mécanisme de réveil, de sorte qu'au moins le composant d'alimentation en énergie (PSUP) soit amené dans un mode normal en fonction d'un deuxième signal externe, de sorte que le composant d'alimentation en énergie (PSUP) délivre les tensions prédéfinies (Vint), pour le mécanisme de réveil dans le contrôleur (SG), une unité de réveil (LDWU) exécutant le mécanisme de réveil uniquement en fonction d'une unique impulsion électrique en tant que deuxième signal externe, **caractérisé en ce que** cette unique impulsion électrique présente une largeur minimale donnée dans le domaine du temps.
